# EUROPEAN PATENT SPECIFICATION

(11) **EP 4 434 958 B1**
(45) Date of publication and mention of the grant of the patent: **04.02.2026**
(21) Application number: 24163792.5
(22) Date of filing: 15.03.2024
(51) Int. Cl.: C05F 9/02, C05F 9/04, C05F 17/10, C05F 17/907, B65F 1/02, F16K 5/04, F16K 31/46, B65F 1/14

(54) **COMPOSTER**
KOMPOSTIERGERÄT
COMPOSTEUR

(30) Priority: 20.03.2023 GB 202304011
(43) Date of publication of application: 25.09.2024
(60) Divisional application: 25225760.5
(73) Proprietor: Exel Industries, 51200 Epernay (FR)
(72) Inventor: BOULTER, Georgia, Birmingham, B76 1AB (GB)
(74) Representative: Cleveland Scott York

(56) References cited:
- EP-B1- 1 226 088
- WO-A1-2022/184571
- CN-U- 211 035 729
- US-A- 1 912 304

## Description

This invention relates to composters.

In particular this application relates to composters of the type which users typically keep in a kitchen cupboard or somewhere similar for the composting of kitchen waste.

Some such composters are known as Bokashi composters. These composters can be used with a particular composting system where a bran composting agent is added to the kitchen waste in order to promote composting.

CN211035729U describes a compost barrel comprising a compost barrel body, an annular block arranged on the composting barrel body, a barrel cover arranged on the annular block, a water faucet arranged on the composting barrel body, a filter plate and a pressing net are arranged in the composting barrel body.

WO2022/184571 A1 describes an apparatus for fermenting biodegradable waste materials, comprising: an outer container, an inner container, which is situated within the outer container and can be removed from the outer container, and a lid. A liquid-collecting chamber is provided in the outer container in a region under the inner container. The inner container comprises at least one drain opening for draining liquid into the liquid-collecting chamber. The outer container also comprises a discharge apparatus for discharging liquid in the liquid-collecting chamber and the apparatus comprises a compression apparatus which is designed to compress material in the inner container.

With such composting systems and others, it is useful to be able to contain and arrange the material to be composted as well as to have a convenient way to extract both the solid composted material after an appropriate period and/or to extract the liquid products of the composting process known as leachate.

There can be a desire to measure the correct amount of composting agent when introducing this into the composter and/or to measure an amount of leachate as this is removed from the composter. Moreover, it is convenient if some tool is provided for moving around and/or compressing down the material to be composted in the composter. It is desirable to provide composters which are convenient to store and use. For example, it is useful if the composter can be kept in one location for both use in composting as well as in the introduction of material for composting and the extraction of solid and/or liquid material after composting. Further it can be advantageous to ensure that any tools required for use in the composting system are readily available for the user.

The present composters have been developed with these desires in mind.

According to the present invention there is provided a composter according to claim 1.

The composter may comprise a strainer portion for separating the holding portion from the tank portion.

The composter may comprise a container that houses at least one of: the holding portion and the tank portion.

Preferably the container houses the holding portion and the tank portion.

The container may comprise a bucket portion and a lid portion.

The bucket portion may house at least one of: the holding portion and the tank portion.

At least one wall portion of the bucket portion may at least partially define the boundary of the holding portion. At least one wall portion of the bucket portion may at least partially define the boundary of the tank portion.

A first wall portion of the bucket portion may partially define the boundary of the holding portion and a second wall portion of the bucket portion may partially define the boundary of the tank portion.

The strainer portion may be provided in the bucket portion between the holding portion and the tank portion.

The lid portion may be moveable between an open position which allows access to an interior of the bucket portion and a closed position that obscures access to the interior of the bucket portion.

The lid portion may be moveably, say pivotably, mounted on the bucket portion. In some embodiments the lid portion may be a separate component that is removeable mounted on the bucket portion when in the closed position. In some cases the lid portion might be removeably hingedly mounted on the bucket portion. That is hinged when attached, but demountable. In other cases the lid portion might be a lift off lid portion.

The storage location may be provided on the lid. The storage location may be provided in the container. The storage location may be provided on an underside of the lid.

The lid may comprise the paddle securing means for holding the paddle in the storage location.

The paddle securing means may comprise at least one paddle engaging portion for engaging with a complementary engaging portion on the paddle. The paddle securing means may comprise at least one clip portion for clipping onto the engaging portion on the paddle. The engaging portion on the paddle may comprise an edge portion of the paddle.

The paddle may comprise the cup securing means for holding the cup in the storage location.

The paddle may comprise a handle portion for holding by a user when using the paddle. The measuring cup may be arranged to clip into position around the handle portion of the paddle to reach the storage location.

The handle portion of the paddle may comprise an upstand portion that projects away from a main body of the paddle and a flange portion. The flange portion may be provided towards a distal end of the upstand portion. The handle portion may be arranged so that a user can grip the handle portion by inserting their fingers in a spacing created between the flange portion and the main body of the paddle by the upstand portion.

The measuring cup may be arranged to clip into position around the upstand portion of the handle portion of the paddle to reach its storage location.

The cup securing means may comprise at least one cup engaging portion for engaging with a complementary engaging portion on the cup. The cup securing means may comprise at least one engaging portion on the paddle for engaging with the engaging portion on the cup. The cup engaging portion on the paddle may comprise one of a recess and a projection and the engaging portion on the cup may comprise a complementary other of a recess and a projection.

The measuring cup may comprise at least one arm, and preferably two arms, which can act as a handle for a user when using the cup. The at least one arm may comprise the engaging means for engaging with the cup engaging means.

Where there are two arms, these may pass one each side of the paddle handle portion as the cup is introduced into its storage location.

The composter, preferably the paddle, may comprise a pair of channel portions each of which is arranged to accept a respective portion of the two arms of the measuring cup when the cup is in its storage location. The interaction of the channel portions and the arms may hold the cup against the composter, preferably the paddle. The engaging means of the cup and the cup engaging means on the composter, preferably on the paddle, may serve to hold the cup in position with the arms received in the channel portions.

Overall in preferred embodiments, the measuring cup can be clipped onto the paddle and the paddle clipped into position on the lid to put the paddle and the measuring cup into their storage positions. This provides tidiness and convenience for the user without interfering with the operation of the composter. Moreover the cup can be mounted onto and removed from the paddle whether or not the paddle is in its own storage position. Further the paddle may be used whether or not the cup is mounted onto the paddle.

The drain port may be provided with a tap for controlling flow of liquid out of the tank portion.

In general the composter will be used in a way to produce liquid "leachate" as a product of the composting process. Typically this leachate can be used as a fertilizer when diluted and/or a weed killer. The provision of a tap allows leachate to be controllably released out of the composter for use as desired without disturbing the contents of the composter.

The tap may be an extendible tap moveable between a retracted position and an extended position. In general, in such a case, an end of the extendible tap may be pulled by a user away from the container of the composter to move the tap to the extended position.

The retracted position may be for storage and/or transport. The extended position may be for operation of the tap.

The provision of an extendible tap allows, say, the composter to be stored in a cupboard with the tap retracted, and then when it is desired to use the tap, the tap may be moved to the extended position. This may be, for example to extend the tap beyond the edge of a shelf on which the composter is stood to allow better access to the tap and, for example, ease the process of filling the measuring cup or other vessel. Correspondingly the provision of an extendible tap allows mounting of the tap lower in the vessel to better allow extraction of the leachate, with little or no void or upstand under the level of the base of the tank and without creating an issue of there being too little room to put the measuring cup or other vessel under the tap. This can also help provide a compact unit which helps reduce cost and waste in manufacture and shipping.

The extendible tap may be a telescoping tap, which may comprise a main tap body for mounting in the composter housing and a telescopic tube which carries a tap valve and is mounted on the main tap body for telescoping movement relative to the main tap body. The tap may be arranged to be movable between the retracted and extended positions by sliding movement of the telescopic and tap valve alone.

The telescopic tube may be mounted within the main tap body.

The telescoping tap may be arranged as a cartridge which is mountable in the housing of the composter. The telescoping tap may be mountable in an aperture in a wall of the housing of the composter. Specifically the tap main body may be mountable in a wall of the housing of the composter to overall mount the tap on the remainder of the composter.

Preferably the main tap body carries a thread via which the main tap body and hence the telescoping tap is screw fittable to the housing. In particular the telescoping tap may be screw fittable into a threaded aperture in a wall of the housing of the composter.

The main tap body may comprise a rotation stop portion for co-operation with a corresponding rotation stop portion on the housing of the composter for holding the main tap body against further threading rotation once the desired degree of screw fitting of the main tap body into the housing has been reached.

In an alternative the main tap body may be passed through an aperture in a wall of the housing and a nut screw fitted onto the thread on the main tap body to hold the tap in place.

The telescopic tube and tap valve may be captured as a unit in the main tap body. This means that the telescopic tube and tap valve can be moved between the extended and retracted positions without a user accidentally dissembling the tap and/or creating a leak path.

The telescopic tube may comprise a stop portion which abuts against a retaining shoulder in the main tap body to hold the telescopic tube against further extension when the extended position is reached.

The main tap body may be of a single piece of material or may comprise a plurality of separate components which together form the main tap body.

The main tap body may comprise a tap ring which comprises the retaining shoulder. The tap ring may be provided as a separate component from a remainder of the main tap body.

The stop portion and retaining shoulder may be provided internally within the main tap body. This again can help against the creation of leak paths out of the composter.

The tap valve may comprise a tail portion which is mounted on the telescopic tube and a head portion.

The head portion may extend axially and/or radially beyond the telescopic tube. The head portion may act as a user control for controlling the position of the valve. The head portion may abut with the main tap body and/or with the composter housing when the telescopic tube and tap valve are in the retracted position.

The tail portion may be mounted within the telescopic tube and may be captured, ie held in position against removal, by, for example, resiliently deformable finger portions which engage with a retaining feature on the interior of the telescopic tube.

The telescopic tube and tap valve may be arranged so that rotation of the tap valve relative to the telescopic tube controls, in use, flow rate of liquid out of the drain port. The telescopic tube and tap valve may each define a respective aperture for allowing the flow of liquid through the tap and out of the drain port, with the allowed flow rate being determined by the degree of coalignment of the two apertures.

The tap main body may carry a housing sealing seal for sealing against the housing wall.

The tap main body may carry a telescopic tube sealing seal for sealing between the tap main body and the telescopic tube.

The tap valve may carry at least one valve seal for sealing between the telescopic tube and the tap valve and sealing against liquid passing out of the aperture in the telescopic tube when the valve is in a closed position.

Any one or more of the seals may comprise a respective O-ring.

Embodiments of the present invention will now be described, by way of example only, with reference to the accompanying drawings in which:
Figure 1 schematically shows a composter with a lid closed and a tap retracted;
Figure 2 shows the composter of Figure 1 with the lid open and the tap extended;
Figure 3 shows the interior of the composter of Figures 1 and 2 through the opening created by the open lid;
Figure 4 shows a paddle and measuring cup detached from the composter of Figures 1 - 3; and
Figure 5 is a sectional view of the tap of the composter shown in Figures 1 - 3.

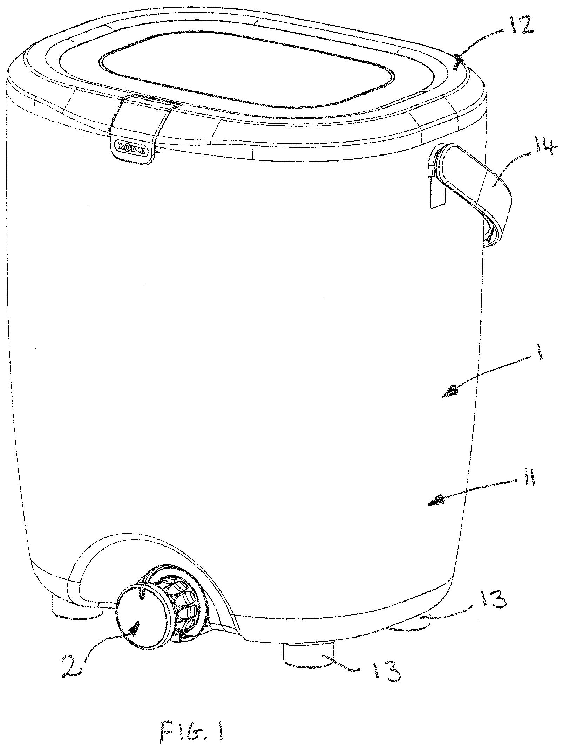

Figure 1 shows a composter or composting unit which comprises a housing 1 having a bucket portion 11 and a lid portion 12. The housing 1 and in particular the bucket portion 11 is arranged to be sat on four feet 13 (three of which can be seen in Figure 1). The composter also comprises a handle 14 via which the composter can be carried when full or empty.

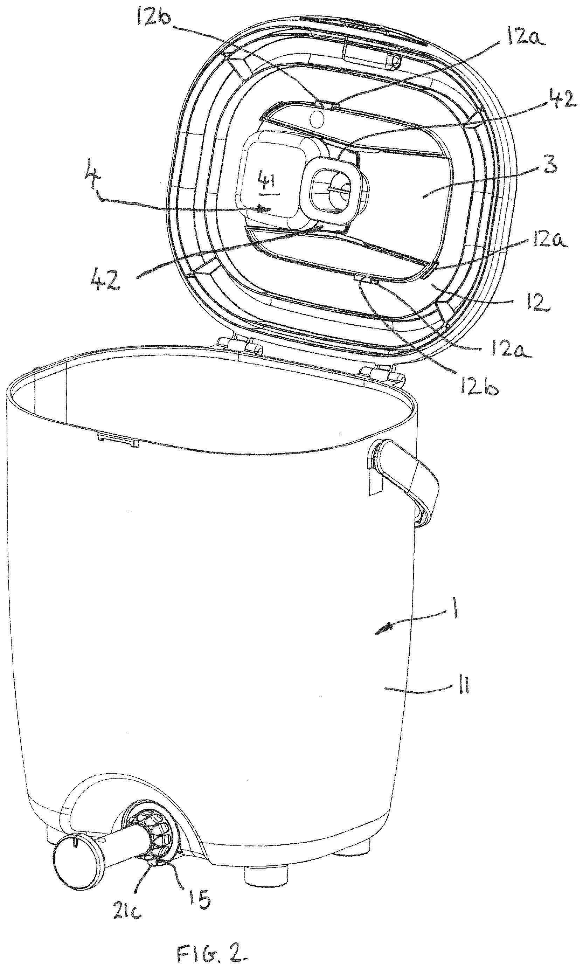

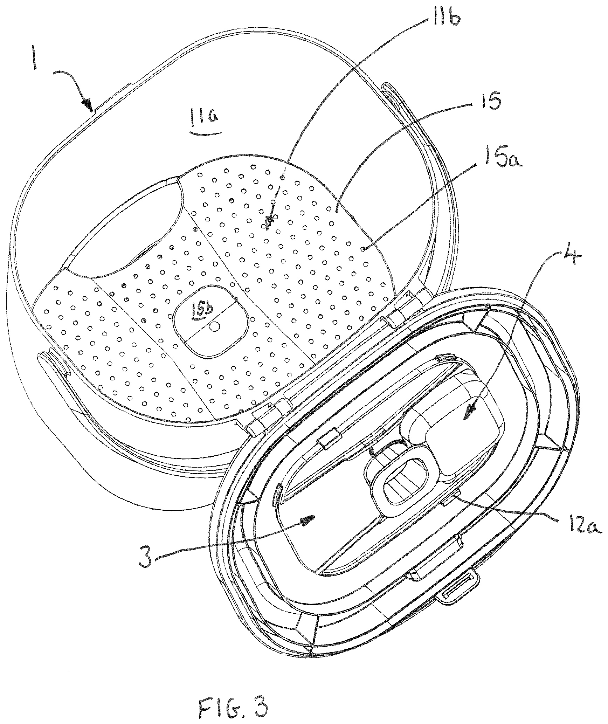

The lid 12 is hingedly mounted on the bucket portion 11 and is movable from a closed position as shown in Figure 1 to an open position as shown in Figure 2. When the lid 12 is in the open position shown in Figures 2 and 3, material to be composted can be introduced into the bucket portion 11 and similarly composted material can be removed out of the bucket portion 11 as and when desired.

A strainer 15 (see Figure 3) is provided in the bucket portion 11 and divides the interior of the bucket portion 11 into a holding portion 11a above the strainer 15 for a holding material to be composted and a tank portion 11b (generally indicated in Figure 3 although obscured by the strainer 15) below the strainer 15 for the collection of liquid, known as leachate, which is product of the composting process.

The strainer 15 is in the form of an apertured plate with a plurality of apertures 15a for allowing liquid produced the composting process to pass from the holding portion 11a into the tank portion 11b. The strainer 15 also comprises a handle portion 15b via which the user may hold the strainer 15 when positioning this in the bucket portion 11 and removing it therefrom. As will be appreciated, the strainer 15 is supported above the level of the base of the bucket portion 11 so as to create a chamber which can act as the tank portion 11b for collecting leachate. The strainer 15 may, for example, be supported on a ledge provided in the interior of the housing 1 or for example, have feet to hold strainer 15 above the level of the base of the bucket portion 11.

The composter comprises a tap 2 (see Figures 1 and 2) to act as a drain port for allowing the controllable extraction of leachate from the tank portion 11b. In the present embodiment the tap 2 is an extending tap and is shown in a retracted position in Figure 1 and in an extended position in Figure 2. In the retracted position the distal end of the tap 2 is close to the main body of the composter - the housing 1. In the extended position the distal end of the tap 2 projects further from the housing 1 than when in the retracted position. This can aid a user in using the tap. The tap 2 and its use will be described in more detail further below.

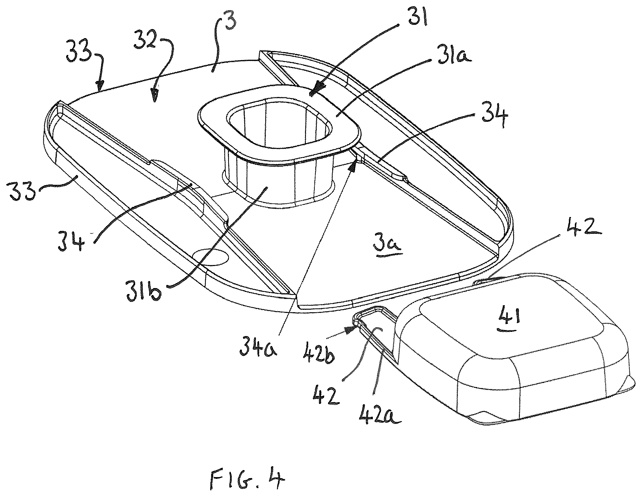

The composter also comprises a paddle 3 and a measuring cup 4. The paddle 3 and measuring cup 4 are shown held in a storage location on the underside of the lid 12 in Figures 2 and 3 and are shown in isolation from one another and the composter housing 1 in Figure 4.

The paddle 3 comprises a handle portion 31 which itself comprises a flange 31a supported on the distal end of an upstand portion 31b mounted on a main body of the paddle 3a. In use a user may hold the handle portion 31 by introducing their fingers into a spacing between the flange 31a and the main body 3a of the paddle 3. This paddle 3 may then be used within the bucket portion 11 for tamping down material provided in the holding portion 11a. When not required for use the paddle 3 may be stored in the storage location in the underside of the lid 12 as shown in Figure 2. In this position the paddle 3 has a face 32 facing away from the lid 12.

As can be seen in Figures 2 and 3 the underside of the lid 12 is provided with a plurality of clip portions 12a for clipping on to an edge 33 of the paddle 3 so as to secure the paddle 3 in the storage location. In the present embodiment five clip portions 12a are provided. Moreover in the present embodiment, two of the clip portions 12a comprise a lip portion 12b which fits over part of the face 32 of the paddle which faces away from the lid 12 whereas the remainder of the clip portions do not have such a lip portion 12b and rather just contact against the edge 33 of the paddle 3. The user may introduce the paddle 3 into the storage location and remove the paddle 3 from the storage location using the handle 31.

The measuring cup 4 has a cup portion 41 and two handle portions 42. Note that the measuring cup 4 is shown orientated with the cup portion 41 upside down in Figure 4 and similarly showing the underside of the cup portion 41 in Figures 2 and 3. The measuring cup 4 may be used for measuring out a composting agent for adding to the bucket 11 and/or for measuring out leachate as this is allowed out of the tap 2. When not in use by a user the measuring cup 4 may be usefully stored in its storage location on the paddle 3. The measuring cup 4 is holdable in its storage location on the paddle 3 whether or not the paddle 3 itself is its own storage location or removed from that storage location for use.

The paddle 3 comprises a pair of channel portions 34 on its face 32. These channel portions 34 extend facing each other on opposite sides of the handle portion 31. The channel portions 34 are arranged to receive edge portions 42a of the handles portions 42 of the measuring cup 4. Thus, to move the measuring cup 4 towards its storage location as shown in Figure 2, the handle portions 42 are slid along the face 32 of the paddle 3 with the edge portions 42a of the handle portion 42 of the measuring cup 4 fed into the channels 34. These channels 34 serve to hold the measuring cup 4 against the paddle in position. Each channel 34 is provided with a respective projection 34a (only one of which may be seen in Figure 4) which is arranged to engage with a respective recess 42b (only one of which may be seen in Figure 4) in the respective handle portion 42a of the measuring cup 4. Thus, as the measuring cup 4 is introduced into its storage position, the projections 34a in the respective channels 34 engage with the respective recesses 42b in the handle portions 42 thus securing the measuring cup against sliding movement relative to the paddle 3 and thus holding the measuring cup in its storage location.

The measuring cup 4 may be moved into the storage location or out of the storage location whether the paddle 3 is held in its own storage location on the underside of the lid 12, or the paddle 3 is separate and out of its storage location.

This provides a tidy and convenient solution for the user such that the paddle 3 and measuring cup 4 are readily available for use when required and kept safely within the composter but away from the material being composted and the leachate when not in use. Furthermore, a compact arrangement is achieved where only a storage location for the paddle 3 itself is required on the housing 1 since the storage location for the measuring cup 4 is provided on the paddle 3. This also helps the paddle 3 to be provided at an appropriate size in relation to the lid/bucket 11. Moreover, the paddle 3 may be used even when the measuring cup 4 is held in its storage position on the paddle 3. This is facilitated because even when the storage cup 4 is in its storage location as shown for example, in Figures 2 and 3, the spacing created by the upstand portion 34 into which a user's fingers may be inserted when holding the handle portion 31, is unobscured to a significant extent. As can be seen for example, in Figure 3, the thickness of the handle portions 42 of the measuring cup 4 is relatively small compared with the size of the spacing between the flange 31a of the handle portion 31 and the face 32 of the main body of the paddle 3a.

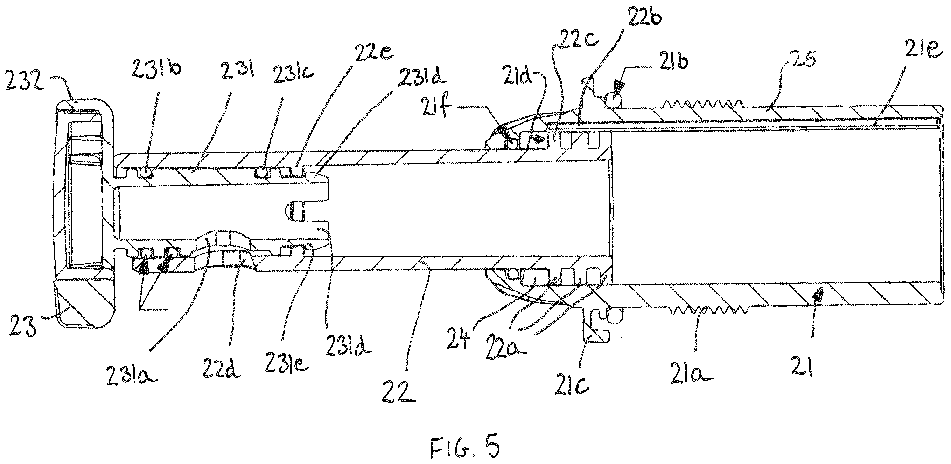

As mentioned above, the tap 2 is movable between a retracted position as shown in Figure 1 and in an extended position as shown in Figure 2. As shown in more detail in Figure 5, the tap in the present embodiment is an extended tap in the form of a telescoping tap.

The telescoping tap comprises a tap main body 21 which is arranged to be received in an appropriate aperture provided in the housing 1 of the composter and a telescoping tube 22 which is arranged for telescoping movement within the tap main body 21 and which carries a tap valve 23.

In the present embodiment, the tap main body 21 carries an external thread 21a which is arranged for threaded engagement in a corresponding thread (not shown) provided in the receiving aperture in the housing 1 of the composter. The telescoping tap 2 is arranged a self-contained cartridge unit which, in this embodiment, may be screw threaded into the housing 11. As this is done an O-ring seal 21b provided on the tap main body 21 seals against the wall of the housing 1. Further, as the tap main body 21 is screwed into position and reaches desired inserted position, a stop portion on the tap main body 21 in the form of a finger 21c abuts against a corresponding stop portion 15 provided on the housing 11 (see Figure 2) so as to prevent overtightening and to ensure that the tap main body 21 and hence tap 2 overall is correctly oriented as installed.

The inner end of the telescoping tube 22 is provided with a radially extending portion which in the present embodiment is made up of three annular ribs 22a.

An axial groove 22b is provided in the projecting ribs 22a and this receives an axially oriented rib 21e running on the inside of the tap main body 21 so as to hold the telescopic tube 22 against rotation relative to the main tap body 21.

The telescoping tube 22 is shown in its fully extended position in Figure 5 corresponding to the position in which the tap is shown in Figure 2. In this position, an innermost of the annular ribs 22a acts as a stop portion 22c and abuts with a retaining shoulder 21d provided in the interior of the tap main body 21. This effectively prevents further extension of the tap beyond the position shown in Figures 2 and 5.

In the present embodiment the tap main body 21 comprises a tap ring 24 provided within a main bore of the tap main body 21. The tap ring 24 comprises the retaining shoulder 21d. Thus in the present embodiment the tap main body 21 comprises two separate components the tap ring 24 and the remainder 25 of the tap main body 21. In other embodiments the tap main body 21 may be of a single piece of material, or indeed comprise more than two separate components.

The stop portion 22c and the retaining shoulder 21d are provided within the tap 2 unit, specifically within the tap main body 21. This helps the provision of a self-contained unit and helps against the creation of leak paths.

A seal 21f in the form of an O-ring is provided towards a front or nose portion of the tap main body 21 for sealing between the tap main body 21 and the telescoping tube 22 as this moves into and out of the tap main body 21, when the tap 2 is moved between its extended and retracted positions. The provision of the separate tap ring 24 facilitates the introduction of and subsequent retention of the seal 21f.

The tap valve 23 comprises a tail portion 231 which is mounted within the telescoping tube 22 and a head portion 232 which extends both axially and radially outside of the telescoping tube 22.

The head 232 acts as a user control which allows the turning of the tap valve 23 relative to the telescoping tube 22 for controlling the flow of liquid of the tap 2. The tail portion 231 of the tap valve 23 comprises an aperture 231a which is alignable with a corresponding aperture 22d provided in the telescoping tube 22. When these apertures 231a and 22d are fully aligned, the tap 2 is fully open whereas when these apertures 231a and 22d are fully non-aligned, the tap 2 is closed.

Two seals 231b and 231c are provided on the tail portion 231 for sealing between the tail portion 231 and the interior of the telescoping tube 22. The first of the seals 231b is a simple O-ring provided around the tail portion 231. The second seal 231c has a more complex shape and is provided diagonally around the tail portion 231. This seal 231c provides a seal such that the aperture 22d of the telescoping tube 22 is on a wet side i.e. in fluid communication with the interior of the housing 1, when the tap is open (for example shown in Figure 5) but on a dry side that is, not in fluid communication with the interior of the housing 1, when the tap is an opposite configuration to that shown in Figure 5, with the tap closed.

In the present embodiment when the tap 2 is in the retracted position as shown in Figure 1, the outlet of the tap 2, that is, in this embodiment, the apertures 231a and 22d is housed within the tap main body 21. This can help against dripping. In fact in this embodiment, the tap outlet, and in particular the aperture 22d in the telescoping tube 22, is located inboard of the telescoping tube seal 21f provided in the tap main body 21, when the tap 2 is in its retracted position. Thus this seal 21f can help seal against any dripping or leaking from the tap 2 when the tap 2 is in its retracted position.

The tail 231 of the tap valve 23 is retained in the telescoping tube 22 by virtue of a plurality of resiliently deformable arm portions 231d which can be pushed through and then abut against a retaining ring 22e provided on the internal wall of the telescoping tube 22. It will be appreciated that as the tap valve 23 is inserted into the telescoping tube 22 these arm portions 231d deform inwardly so that their ends may pass through the retaining ring portion 22e and when the tap valve 23 reaches the position shown in Figure 5, the arm portions 231d can spring outwards again with shoulders 231e of the arm portions abutting against the ring portion 22e to hold the tap valve 23 against removal.

In operation, the user may open the lid 12 in order to gain access to the interior of the housing 1. At this point, compostable material may be put into the holding portion 11a tamped down using the paddle 3 if desired and composting agent added to the interior of the composting unit using the measuring cup 4 if desired. Then the paddle 3 and measuring cup 4 may be returned to their storage locations if they have been used, the lid 12 closed and the unit left to compost the content. At a later time the lid 12 may be opened in order to gain access to the solid composted material and/or to add more material or composting agent.

Furthermore, whether or not the lid is open, leachate maybe drained off through the tap 2. To do this the user would first move the tap 2 from the retracted position shown in Figure 1 to the extended position shown in Figure 2 and then rotate the tap valve 23 towards an open position where liquid can flow out of the housing 1 through the tap main body 21 and telescoping tube 22 and out of the apertures 231a and 22d. After use the tap 2 may be returned to the retracted position.

The tap 2 may be kept in the retracted position for general use of the composting unit as well as during transport and storage and moved only to the extending position as shown in Figure 2 when it is desired to extract leachate (or other liquid) from the interior of the composter. Moreover, it will be appreciated that if the composter is positioned say, on a cupboard shelf, it may be positioned near the front edge of the shelf but not over hanging that shelf so that for example, a cupboard door can be shut in front of the composter. Then when it is desired to extract leachate from within the composter, the extendable tap 2 may be extended so that it extends over the edge of the shelf such that the measuring cup 4 or another suitable container may be positioned under the tap 2 to receive the leachate extracted from the composter.

Furthermore, it will be noted that in the present embodiment the tap 2 is positioned adjacent the base of the composter, in particular adjacent the base of the tank portion 11b so the amount of any liquid that may be held in the tank that cannot be extracted via the tap 2 is minimised. Furthermore, whilst feet 13 are provided on which to stand the composter, these have a relatively low height such that the overall height of the composter is minimised. Again, this is facilitated by the provision of the extending tap.

In alternatives the lid portion may be a separate component that is removeable mounted on the bucket portion when in the closed position. In some cases the lid portion might be removeably hingedly mounted on the bucket portion. That is hinged when attached, but demountable. In other cases the lid portion might be a lift off lid portion.

## Claims

1. A composter comprising a holding portion (11a) for holding material to be composted, a tank portion (11b) for collecting leachate formed during composting, a drain port (2) for allowing flow of collected leachate out of the tank portion, and a paddle (3) for tamping down material added to the composter, **characterized in that** the composter further comprises a paddle storage location for the paddle (3) and paddle securing means (12a) for holding the paddle in the paddle storage location, and a measuring cup (4) for use in measuring leachate produced in the composter and/or measuring composting agent for addition to the composter, wherein the composter further comprises a cup storage location for the measuring cup (4) and comprises cup securing means (34) for holding the cup in the cup storage location, in which the measuring cup (4) is mountable on the paddle (3) to introduce the measuring cup (4) into the cup storage location.

2. A composter according to claim 1 in which the paddle storage location is provided on a lid (12) of the composter.

3. A composter according to claim 2 in which the paddle storage location is provided on an underside of the lid (12).

4. A composter according to any preceding claim in which the paddle (3) comprises a handle (31) portion for holding by a user when using the paddle (3) and the measuring cup is arranged to clip into position around the handle portion (31) of the paddle (3) to reach the cup storage location.

5. A composter according to any preceding claim in which the measuring cup (4) comprises two arms (42), which can act as a handle for a user when using the cup (4).

6. A composter according to claim 5, in which the paddle (3) comprises a pair of channel portions (34) each of which is arranged to accept a respective portion of the two arms (42) of the measuring cup (4) when the cup is in its storage location wherein the interaction of the channel portions (34) and the arms hold the cup against the paddle (3).

7. A composter according to any preceding claim in which the drain port (2) is provided with a tap for controlling flow of liquid out of the tank portion, and the tap is an extendible tap moveable between a retracted position and an extended position.

8. A composter according to claim 7 in which the extendible tap is a telescoping tap, which comprises a main tap body (21) for mounting in the composter housing and a telescopic tube (22) which carries a tap valve (23) and is mounted for telescoping movement relative to the main tap body (21).

9. A composter according to claim 8 in which the telescoping tap is arranged as a cartridge which is mountable in an aperture in a wall of the housing of the composter.

10. A composter according to claim 9 in which the main tap body (21) carries a thread via which the main tap body (21) and hence the telescoping tap is screw fittable to the housing.

11. A composter according to any one of claims 8 to 10 in which the tap valve (23) and telescopic tube (22) are captured as a unit in the main tap body (21).

12. A composter according to any one of claims 8 to 11 in which the telescopic tube comprises a stop portion (22c) which abuts against a retaining shoulder (21d) in the main tap body (21) to hold the telescopic tube (22) against further extension when the extended position is reached.

13. A composter according to claim 12 in which the stop portion (22c) and retaining shoulder (21d) are provided internally within the main tap body (21).

## Patentansprüche

1. Komposter, umfassend einen Halteabschnitt (11a) zum Halten von zu kompostierendem Material, einen Tankabschnitt (11b) zum Sammeln von während des Kompostierens gebildetem Sickerwasser, einen Abflussstutzen (2) zum Ermöglichen eines Flusses von gesammeltem Sickerwasser aus dem Tankabschnitt und ein Paddel (3) zum Niederstampfen von dem Komposter zugegebenem Material, **dadurch gekennzeichnet, dass** der Komposter ferner Folgendes umfasst: einen Paddelstauplatz für das Paddel (3) und Paddelbefestigungsmittel (12a) zum Halten des Paddels in dem Paddelstauplatz und einen Messbecher (4) zur Verwendung beim Messen von in dem Komposter erzeugtem Sickerwasser und/oder Messen von Kompostiermittel zum Zugeben in den Komposter, wobei der Komposter ferner einen Becherstauplatz für den Messbecher (4) umfasst und Becherbefestigungsmittel (34) zum Halten des Bechers in dem Becherstauplatz umfasst, wobei der Messbecher (4) an dem Paddel (3) montiert werden kann, um den Messbecher (4) in den Becherstauplatz einzubringen.

2. Komposter nach Anspruch 1, wobei der Paddelstauplatz an einem Deckel (12) des Komposters bereitgestellt ist.

3. Komposter nach Anspruch 2, wobei der Paddelstauplatz an einer Unterseite des Deckels (12) bereitgestellt ist.

4. Komposter nach einem der vorangehenden Ansprüche, wobei das Paddel (3) einen Griffabschnitt (31) zum Halten durch einen Benutzer beim Verwenden des Paddels (3) umfasst und der Messbecher dazu angeordnet ist, um den Griffabschnitt (31) des Paddels (3) in Position geklemmt zu werden, um den Becherstauplatz zu erreichen.

5. Komposter nach einem der vorangehenden Ansprüche, wobei der Messbecher (4) zwei Arme (42) umfasst, die als Griff für eine Benutzer beim Verwenden des Bechers (4) dienen können.

6. Komposter nach Anspruch 5, wobei das Paddel (3) ein Paar Nutabschnitte (34) umfasst, die jeweils dazu angeordnet sind, einen jeweiligen Abschnitt der zwei Arme (42) des Messbechers (4) aufzunehmen, wenn sich der Becher in seinem Stauplatz befindet, wobei die Wechselwirkung der Nutabschnitte (34) und der Arme den Becher an dem Paddel (3) hält.

7. Komposter nach einem der vorangehenden Ansprüche, wobei der Abflussstutzen (2) mit einem Hahn versehen ist, um den Fluss von Flüssigkeit aus dem Tankabschnitt zu steuern, und der Hahn ein ausziehbarer Hahn ist, der zwischen einer eingezogenen Stellung und einer ausgezogenen Stellung bewegbar ist.

8. Komposter nach Anspruch 7, wobei der ausziehbare Hahn ein Teleskophahn ist, der Folgendes umfasst: einen Haupthahnkörper (21) zum Montieren in dem Kompostergehäuse und ein Teleskoprohr (22), das ein Hahnventil (23) trägt und zur Teleskopbewegung relativ zu dem Haupthahnkörper (21) montiert ist.

9. Komposter nach Anspruch 8, wobei der Teleskophahn als Patrone angeordnet ist, die in einer Öffnung in einer Wand des Gehäuses des Komposters montierbar ist.

10. Komposter nach Anspruch 9, wobei der Haupthahnkörper (21) ein Gewinde trägt, mittels dessen der Haupthahnkörper (21) und somit der Teleskophahn in das Gehäuse geschraubt werden kann.

11. Komposter nach einem der Ansprüche 8 bis 10, wobei das Hahnventil (23) und das Teleskoprohr (22) als Einheit in dem Haupthahnkörper (21) gefangen sind.

12. Komposter nach einem der Ansprüche 8 bis 11, wobei das Teleskoprohr einen Anschlagabschnitt (22c) umfasst, der an einem Rückhalteabsatz (21d) in dem Haupthahnkörper (21) anstößt, um das Teleskoprohr (22) gegen weiteres Ausziehen zu halten, wenn die ausgezogene Stellung erreicht ist.

13. Komposter nach Anspruch 12, wobei der Anschlagabschnitt (22c) und der Rückhalteabsatz (21d) intern innerhalb des Haupthahnabschnitts (21) bereitgestellt sind.

## Revendications

1. Composteur comportant une partie de retenue (11a) servant à retenir du matériau destiné à être composté, une partie formant réservoir (11b) servant à recueillir du lixiviat formé au cours du compostage, un orifice de vidange (2) servant à permettre l'écoulement de lixiviat recueilli hors de la partie formant réservoir, et une palette (3) servant à tasser le matériau ajouté au composteur, **caractérisé en ce que** le composteur comporte par ailleurs un emplacement de rangement de palette pour la palette (3) et un moyen d'assujettissement de palette (12a) servant à retenir la palette dans l'emplacement de rangement de palette, et un gobelet doseur (4) destiné à être utilisé pour mesurer le lixiviat produit dans le composteur et/ou pour mesurer l'agent de compostage à ajouter au composteur, dans lequel le composteur comporte par ailleurs un emplacement de rangement de gobelet pour le gobelet doseur (4) et comporte un moyen d'assujettissement de gobelet (34) servant à retenir le gobelet dans l'emplacement de rangement de gobelet, dans lequel le gobelet doseur (4) est en mesure d'être monté sur la palette (3) pour introduire le gobelet doseur (4) dans l'emplacement de rangement de gobelet.

2. Composteur selon la revendication 1, dans lequel l'emplacement de rangement de palette est mis en œuvre sur un couvercle (12) du composteur.

3. Composteur selon la revendication 2, dans lequel l'emplacement de rangement de palette est mis en œuvre sur une face inférieure du couvercle (12).

4. Composteur selon l'une quelconque des revendications précédentes, dans lequel la palette (3) comporte une partie formant poignée (31) destinée à être tenue par un utilisateur lors de l'utilisation de la palette (3) et le gobelet doseur est agencé pour être fixé en position autour de la partie formant poignée (31) de la palette (3) pour atteindre l'emplacement de rangement de gobelet.

5. Composteur selon l'une quelconque des revendications précédentes, dans lequel le gobelet doseur (4) comporte deux bras (42), qui peuvent tenir lieu de poignée pour un utilisateur lors de l'utilisation du gobelet (4).

6. Composteur selon la revendication 5, dans lequel la palette (3) comporte une paire de parties formant canaux (34), chacun d'entre eux étant agencé pour accepter une partie respective des deux bras (42) du gobelet doseur (4) quand le gobelet est dans son emplacement de rangement, l'interaction des parties formant canaux (34) et des bras retenant le gobelet contre la palette (3).

7. Composteur selon l'une quelconque des revendications précédentes, dans lequel l'orifice de vidange (2) est doté d'un robinet servant à réguler l'écoulement de liquide hors de la partie formant réservoir, et le robinet est un robinet extensible en mesure d'être déplacé entre une position rétractée et une position déployée.

8. Composteur selon la revendication 7, dans lequel le robinet extensible est un robinet télescopique, qui comporte un corps de robinet principal (21) destiné à être monté dans le logement de composteur et un tube télescopique (22) qui porte une soupape de robinet (23) et qui est monté à des fins de mouvement télescopique par rapport au corps de robinet principal (21).

9. Composteur selon la revendication 8, dans lequel le robinet télescopique est agencé sous la forme d'une cartouche qui est en mesure d'être montée dans une ouverture dans une paroi du logement du composteur.

10. Composteur selon la revendication 9, dans lequel le corps de robinet principal (21) porte un filetage par le biais duquel le corps de robinet principal (21) et donc le robinet télescopique sont en mesure d'être fixés sur le logement par vissage.

11. Composteur selon l'une quelconque des revendications 8 à 10, dans lequel la soupape de robinet (23) et le tube télescopique (22) sont capturés sous la forme d'une unité dans le corps de robinet principal (21).

12. Composteur selon l'une quelconque des revendications 8 à 11, dans lequel le tube télescopique comporte une partie formant butée (22c) qui vient buter contre un épaulement de retenue (21d) dans le corps de robinet principal (21) pour retenir le tube télescopique (22) contre toute autre extension quand la position déployée est atteinte.

13. Composteur selon la revendication 12, dans lequel la partie formant butée (22c) et l'épaulement de retenue (21d) sont mis en œuvre à l'intérieur dans le corps de robinet principal (21).
